# EUROPÄISCHE PATENTSCHRIFT

(11) **EP 1 632 519 B1**
(45) Veröffentlichungstag und Bekanntmachung des Hinweises auf die Patenterteilung: **05.12.2018**
(21) Anmeldenummer: 05110623.5
(22) Anmeldetag: 19.03.2003
(51) Int. Cl.: C08G 81/02, C04B 24/26

(54) **Polymere in festem Aggregatzustand**
Polymers in a solid state
Polymères à l'état solide

(30) Priorität: 25.03.2002 EP 02006760
(43) Veröffentlichungstag der Anmeldung: 08.03.2006
(62) Teilanmeldung aus: 03724922.4
(73) Patentinhaber: Sika Technology AG, 6340 Baar (CH)
(72) Erfinder: Sulser, Ueli, 8102 Oberengstringen (CH); Schober, Irene, 8008 Zürich (CH); Mäder, Urs, 8500 Frauenfeld (CH); Velten, Ulf, 5000 Aarau (CH)
(74) Vertreter: Sika Patent Attorneys

(56) Entgegenhaltungen:
- WO-A-97/00898

## Beschreibung

### Technisches Gebiet

Die Erfindung betrifft die Herstellung von Polymeren in festem Aggregatzustand, welche bei Bedarf rückstandslos in Wasser zu lösen sind und/oder in Wasser dispergierbar sind, sowie Verfahren zu deren Herstellung und Verwendungen.

### Stand der Technik

Polyalkylenglycol-Carboxylate sind seit einigen Jahren als Dispergiermittel für wässrige Dispersionen im Einsatz. Sie ermöglichen drastisch die Reduktion des Wassergehaltes dieser Dispersionen. Diese Polymere werden in wässriger Lösung hergestellt oder fallen als wässrige Polymerlösungen an. Der Nachteil dieser Lösungen sind hohe Transportkosten, da ein hoher Anteil Lösungsmittel mittransportiert werden muss. Weiters kann es, speziell in wässrigen Lösungen, zu Bakterienbefall kommen. Wässrige Lösungen sind frostempfindlich, das heisst, sie können einerseits gefrieren, andererseits kann es unter kühlen Lagerbedingungen zur Auskristallisation von Feststoff kommen. Dies erfordert spezielle Lagerbedingungen. Wässrige Lösungen von Polyalkylenglykol-Carboxylaten haben, wenn sie Estergruppen aufweisen, wie sie beispielsweise durch Copolymerisation von Acrylestern entstanden sind, nur beschränkte Lagerfähigkeit, da diese Ester zur Hydrolyse, speziell bei höheren Temperaturen, neigen.

Pulver, beziehungsweise Feststoffe, haben gegenüber wässrigen Lösungen den technischen Vorteil, dass beim Transport wesentlich geringere Kosten anfallen, die Lagerstabilität wegen geringerem biologischen Befall oder geringerer Spaltung möglicher Esterbindungen in den modifizierten Polycarboxylaten deutlich höher ist und die Frostempfindlichkeit deutlich reduziert wird.

WO 0017263 beschreibt die Herstellung von wasserlöslichen Polymerpulvern auf Basis von Polyoxyalkylenglykol-Carboxylaten durch Trocknung von wässrigen Polymerlösungen unter Zusatz von Stabilisatoren.

EP 1052232 beschreibt die Herstellung eines pulverförmigen Dispergiermittels, wobei der Flüssigkeit, die ein Polycarboxylatpolymer enthält, ein Reduktionsmittel zugesetzt wird und die ein Reduktionsmittel enthaltende Flüssigkeit anschliessend getrocknet und pulverisiert wird.

WO 0047533 beschreibt die Herstellung von pulverförmigen Polymerzusammensetzungen unter Einarbeitung von mineralischem Trägermaterial in ein Polyethercarboxylat.

Die WO 97/00898 beschreibt Superverflüssiger, welche durch Aufpfropfen von Polyoxyalkylenaminen und Polyoxyalkylenoxiden auf ein Polycarboxylat-Rückgrat hergestellt werden und im Hinblick auf eine Kontrolle des Lufteintrags vorteilhaft sind. Mit solchen Superverflüssigern behandelte Zementzusammensetzungen können jederzeit während der Zementherstellung gebildet werden. Beispielsweise können die Superverflüssiger in der Zementmühle mit Zementklinker während des Mahlvorgangs beigemischt werden oder später mit einem fertigen Zement vermischt werden.

Feste Polymere, die durch Trocknung aus Lösungen hergestellt werden, benötigen einen zusätzlichen Verfahrensschritt, verbrauchen viel Energie und sind teuer. Polymerpulver die mit mineralischem Trägermaterial vermischt sind, eigenen sich nicht für die Herstellung von stabilen wässrigen Polymerlösungen nach dem Wiederauflösen.

### Darstellung der Erfindung

Es ist daher die Aufgabe dieser Erfindung, die beschriebenen Nachteile des Standes der Technik zu überwinden, und ein Polymer herzustellen, welches in festem Aggregatzustand anfällt und bei Bedarf rückstandslos in Wasser wieder zu lösen und/oder in Wasser dispergierbar ist, ohne einen Sprühtrocknungsschritt oder wasserunlösliche Zusätze zu benötigen. Unerwartet wurde gefunden, dass die Nachteile des Standes der Technik durch erfindungsgemässe Polymere in festem Zustand gemäss Anspruch 1 behoben werden können.

Die vorliegende Erfindung beschreibt Polymere in festem Aggregatzustand, welche erhältlich sind durch die Reaktion von mindestens einem Polymer **A,** welches hergestellt wird aus mindestens einer ungesättigten Mono- oder Dicarbonsäure oder einem Analogon derselben (**a**) und gegebenenfalls mindestens einem ethylenisch ungesättigten Monomer (**b**), mit mindestens einem Polymer **B,** welches mit unter üblichen Reaktionsbedingungen nicht reaktiven Endgruppen einseitig abgeschlossen ist und am anderen Ende Hydroxy- oder Amin-funktionalisiert ist, und gegebenenfalls mit mindestens einem Amin **C.**

Des weiteren sind solche Polymere in festem Aggregatzustand auch erhältlich durch die Reaktion von mindestens einer ungesättigten Mono- oder Dicarbonsäure oder einem Analogon derselben (**a**) in Gegenwart eines Radikalbildners mit mindestens einem ungesättigten Ester oder Amids (**c**) eines Polymers **B,** welches mit unter üblichen Reaktionsbedingungen nicht reaktiven Endgruppen einseitig abgeschlossen ist und am anderen Ende Hydroxy- oder Amin-funktionalisiert ist, und gegebenenfalls mit mindestens einem ethylenisch ungesättigten Monomer (**b**). Weiterhin sind beschrieben die Herstellung sowie die Verwendung des festen Polymers als Dispergiermittel und Verflüssiger in zementösen Systemen.

### Weg zur Ausführung der Erfindung

Die vorliegende Erfindung betrifft Polymere in festem Aggregatzustand, welche erhältlich sind durch die Reaktion von mindestens einem Polymer **A,** welches hergestellt ist aus mindestens einem Monomer **a,** welches ausgewählt ist aus ungesättigten Mono- oder Dicarbonsäuren, oder Analoga von ungesättigten Mono- oder Dicarbonsäuren, und gegebenenfalls mindestens einem ethylenisch ungesättigten Monomer **b,** mit mindestens einem Polymer **B,** welches mit unter üblichen Reaktionsbedingungen nicht reaktiven Endgruppen einseitig abgeschlossen ist und am anderen Ende Hydroxy- oder Amin-funktionalisiert ist, und gegebenenfalls mit mindestens einem Amin **C.**

Unter 'festen Polymeren' oder 'Polymeren in festem Aggregatzustand' versteht man im Sinne der Erfindung Polymere, die bei Raumtemperatur im festen Aggregatzustand vorliegen und beispielsweise Pulver, Schuppen, Pellets oder Platten sind und sich in dieser Form problemlos transportieren und lagern lassen.

Unter 'mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei 'einseitig abgeschlossen' Verbindungen ist nur eine Seite nicht mehr zur Reaktion fähig.

Polymer **A** kann durch Polymerisation von mindestens einem Monomer **a** und gegebenenfalls mindestens einem Monomer **b** erhalten werden.

Monomer **a** ist ausgewählt aus der Gruppe umfassend ungesättigte Monocarbonsäuren, ungesättigte Dicarbonsäuren, Analoga derselben und Mischungen derselben. Ungesättigte Mono- oder Dicarbonsäuren umfassen vorzugsweise Maleinsäure, Itaconsäure, oder Crotonsäure, insbesondere Acrylsäure oder Methacrylsäure. Unter Analogon einer Mono- oder Dicarbonsäure versteht man im Sinne der vorliegenden Erfindung Säuresalze, Säurehalogenide, Säureanhydride und Säureester, im besonderen Alkyl-Säureester.

Monomer **b** ist ausgewählt aus der Gruppe von ethylenisch ungesättigten Monomeren. Solche ethylenisch ungesättigten Monomeren umfassen insbesondere
- ethylenisch ungesättigte Aromaten wie beispielsweise Styrol, alpha-methylStyrol,
- Vinylverbindungen wie beispielsweise N-Vinylpyrrolidon, Vinylacetat, Vinylethylether, Vinylsulfonsäure, Vinylcaprolactam,
- (Meth)allylverbindungen wie beispielsweise (Meth) allylsulfonsäure, Allylglycidylether, Allylpolyglykolether,
- ungesättigte Amide oder Nitrile wie beispielsweise Acrylnitril oder Acrylamid,
- ethylenisch ungesättigte Verbindungen wie beispielsweise Ethylen, Propylen, Butylen, Isobutylen.

Das Polymer **A** kann auch als Salz, oder teilneutralisiert vorliegen.

Bei der Herstellung des Polymers **A** sind allenfalls verwendete Initiatoren, Co-Initiatoren und Polymerisationsregler so zu wählen, dass in Polymer **A** keine reaktionsfähigen Hydroxyl- oder Aminfunktionen vorhanden sind.

Das molare Verhältnis der Monomerbausteine **a** und **b** in Polymer **A** ist üblicherweise im Bereich von 100:0 - 20:80, vorzugsweise 100:0 - 30:70, insbesondere 98:2 - 70:30.

Unter 'Molekulargewicht' oder 'Molgewicht' versteht man im Sinne der Erfindung das Molekulargewichtsmittel M_{w}.

Das Molgewicht des Polymers **A** ist beispielsweise 1'000-100'000 g/mol, vorzugsweise 1'000-50'000 g/mol, besonders bevorzugt 2'000-30'000 g/mol, insbesondere 2'000-15'000 g/mol.

Polymer **B,** ist mit unter üblichen Reaktionsbedingungen nicht reaktiven Endgruppen einseitig abgeschlossen. Bevorzugt handelt es sich hierbei um ein Polymer mit einem Polyalkylenglykol-Grundgerüst. Bevorzugt entspricht dieses Polymer **B** der Formel

X-(EO)ₓ-(PO)_{y}-(BuO)_{z}-R

wobei x, y, z unabhängig voneinander je die Werte 0 - 250 aufweisen und x+y+z = 3 oder grösser ist;
X=OH oder NHR', mit R'=Alkyl mit 1-20 Kohlenstoffatomen, Alkylaryl mit 7-20 Kohlenstoffatomen oder H, vorzugsweise R'=H;
EO=Ethylenoxy, PO=Propylenoxy, BuO=Butylenoxy oder Isobutylenoxy:
und R= Alkyl mit 1-20 Kohlenstoffatomen oder Alkylaryl mit 7-20 Kohlenstoffatomen
   bedeuten.

Die Reihenfolge der Ethylenoxid(EO)-, Propyleneoxid(PO)- und Butylenoxid(BuO)-Einheiten in Polymer **B** kann blockweise und/oder statistisch verteilt sein.

Das molare Verhältnis von Polymeren **B** die Hydroxyl-Endgruppen enthalten zu Polymeren **B** die Amin-Endgruppen enthalten, ist 100:0 bis 0:100, vorzugsweise 100:0 bis 5:95 , insbesondere 100:0 bis 20:80, besonders 100:0 bis 91:9.

In der Herstellung des festen Polymers sind die Amine **C** ausgewählt aus Ammoniak, Ammoniumsalzen, primären, sekundären linearen und verzweigten C1-C20 Alkylaminen sowie sekundären C1-C20 Hydroxyaminen.

Das Verhältnis der Summe der Carbonsäuregruppen oder deren Analoga in Polymer **A** zu der Summe der Hydroxy- und Amino-Gruppen in den Polymeren **B** ist 50:1 bis 1.1:1, bevorzugt 30:1 bis 1.1:1.

Pro Carbonsäuregruppe oder deren Analoga in Polymer **A** werden für die Herstellung des festen Polymers 0-0.5 Einheiten, vorzugsweise 0.01-0.3 Einheiten, Amin **C** eingesetzt.

Die Reaktion von Polymeren **A** mit Polymeren **B** und gegebenenfalls Aminen **C** wird unter Bedingungen durchgeführt, die zumindest zu teilweiser Veresterung beziehungsweise Amidierung der Carboxylat-Gruppen in Polymer **A** führen. Die Reaktion wird vorzugsweise bei höherer Temperatur durchgeführt, besonders bevorzugt zwischen 140 und 250°C, insbesondere zwischen 150 und 200°C. Veresterungskatalysatoren wie beispielsweise Lewis Säuren können zugegeben werden. Entstehende Nebenprodukte können während der Reaktion aus der Polymerschmelze entfernt werden, zum Beispiel durch Luft- oder Stickstoffstrom, Vakuum oder Salzausfällung.

Weiterhin beschreibt die Erfindung Polymere in festem Aggregatzustand, welche erhältlich sind durch die Reaktion von mindestens einem Monomer **a,** welches ausgewählt ist aus ungesättigten Mono- oder Dicarbonsäuren, oder Analoga von ungesättigten Mono- oder Dicarbonsäuren, in Gegenwart eines Radikalbildners mit mindestens einem Monomer **c,** ausgewählt aus der Gruppe der ungesättigten Ester oder Amide von Polymeren **B**, welche mit unter üblichen Reaktionsbedingungen nicht reaktiven Endgruppen einseitig abgeschlossen ist und am anderen Ende Hydroxy- oder Amin-funktionalisiert ist, mit gegebenenfalls mindestens einem ethylenisch ungesättigten Monomer **b.**

Die Monomere **a, b** und Polymer **B** sind bereits vorher beschrieben worden. Monomere **c** sind ausgewählt aus der Gruppe der ungesättigten Estern oder Amiden eines Polymeren **B.** Bevorzugt handelt es sich bei Monomer **c** um einen Ester oder Amid einer α,β-ungesättigten Carbonsäure, insbesondere um einen Ester oder Amid der Acrylsäure oder Methacrylsäure.

Die molaren Verhältnisse der Monomeren **a, b** und **c** im obigen Copolymer folgen der Bedingung (**a+c**):**b** = 100:0 bis 30:70, vorzugsweise 100:0 bis 50:50, insbesondere 98:2 bis 70:30. Das molare Verhältnis der Monomeren **a** und **c** im Copolymer folgen der Bedingung **a:c** = 200:1 bis 0.1:1, vorzugsweise 100:1 bis 0.1:1, insbesondere 29:1 bis 0.1:1.

Die Copolymerisation der Monomeren **a, b** und **c** kann nach der üblichen radikalischen Copolymerisations-Technik durchgeführt werden. Als Initiatoren eignen sich beispielsweise organische oder anorganische Peroxide, Hydroperoxide, Persulfate oder organische Azoverbindungen. Zur Regelung der Molekulargewichte können Regler eingesetzt werden, wie beispielsweise anorganische oder organische Schwefelverbindungen, Aldehyde, Ameisensäure, oder anorganische Phosphorverbindungen. Die Polymerisation kann auch durch Redox-Initiatoren ausgelöst werden. Die Reaktion kann ohne Lösungsmittel oder in einem Lösungsmittel durchgeführt werden. Beispiele für geeignete Lösungsmittel sind Toluol, Benzol, Wasser sowie Mischungen davon, bevorzugt Wasser. Das Polymer muss, bei Verwendung eines Lösungsmittels, vor dem Verarbeiten vom Lösungsmittel abgetrennt werden, dies kann durch Ausfällen des Polymers und anschliessendes Abtrennen des Lösungsmittels oder durch Abdestillieren des Lösungsmittel mit oder ohne Vakuum erfolgen. Gegebenenfalls muss das Polymer durch Zuführen von Wärme noch geschmolzen werden. Die entstandene Polymerschmelze kann wie beschrieben weiterverarbeitet werden.

In beiden Möglichkeiten der Herstellung der festen Polymeren gilt weiterhin das Folgende als bevorzugt.

Vorteilhaft ist, wenn der Gewichtsanteil der Summe von Propyleneoxid (PO)- und Butylenoxid(BuO)- Einheiten 29 Gewichts-% des Polymeren **B** nicht überschreitet, insbesondere kleiner als 20 Gewichts-% ist.

Vorteilhaft ist, wenn das Molekulargewicht des Polymers **B** etwa 120-20'000 g/mol, insbesondere etwa 250-10'000 g/mol ist.

Weiterhin vorteilhaft ist, wenn der Anteil von allen Polymeren **B** mit Molekulargewichten unter 500g/mol nicht mehr als 70 Mol-% aller Polymere **B** beträgt, vorzugsweise kleiner als 50 Mol-%, insbesondere kleiner als 30 Mol-% beträgt.

Es ist dem Fachmann bekannt, dass technisch hergestellte monofunktionelle Polyalkyleneoxide, d.h. mit unter üblichen Reaktionsbedingungen nicht reaktiven Endgruppen einseitig abgeschlossene Polyalkylendiole, immer einen gewissen Anteil an Verunreinigungen aufweisen, welche nicht mit Endgruppen abgeschlossen sind. Insbesondere sind dies solche die vom Fachmann mit dem Term 'Difunktionalität' berücksichtigt werden. Der Gewichtsanteil von difunktionellen Polymeren in Polymer **B** beträgt vorteilhaft weniger als 3 Gewichts-%, vorzugsweise weniger als 2 Gewichts-%, insbesondere weniger als 1 Gewichts-%, bezogen auf das Gewicht des Polymeren **B.**

Es hat sich gezeigt, dass die Zugabe gewisser wasserlöslicher oder wasserdispergierbarer Stoffe die Erhärtungsreaktion der Polymerschmelze beschleunigen kann. Beispiele für solche Stoffe sind organische oder anorganische Salze wie beispielsweise Alkali- oder Erdalkalisalze von Salpetersäure, Phosphorsäure, Phosphoriger Säure, Fettsäuren, Sulfonsäuren, Phthalsäure oder organische Verbindungen wie beispielsweise Harnstoff, höhere Alkohole wie beispielsweise Fettalkohole oder Neopentylglykol. Diese Zusätze können zu jedem Zeitpunkt vor dem Verarbeiten der Polymerschmelze zugegeben werden.

Diese Zusätze werden dem Polymer, vorzugsweise der Schmelze, in 0 bis 5 Gewichts-% bezogen auf das Polymer in festem Aggregatzustand zugegeben.

Unter ,vor dem Verarbeiten der Polymerschmelze' ist jeder Arbeitsschritt bei der Polymerherstellung gemeint, der vor dem Erstarren der Polymerschmelze erfolgt.

Die am Ende der Reaktion im Reaktor vorliegende Polymerschmelze kann in Gefässe abgefüllt werden um dort zu erstarren. Diese festen Polymere können zur Weiterverarbeitung wieder aufgeschmolzen werden und dann weiterverarbeitet werden.

Die am Ende der Reaktion im Reaktor vorliegende Polymerschmelze kann aber auch kontinuierlich oder portionsweise mit dem Fachmann bekannten und geeigneten Mitteln zur Konfektionierung von handhabbaren Feststoffen weiterverarbeitet werden. Beispielsweise kann sie in Platten gegossen werden und, in dieser Form erstarrt, anschliessend zerkleinert werden, beispielsweise durch Zerhacken, Mahlen oder Pellettieren. Der Erstarrungsvorgang kann beispielsweise durch Kühlen beschleunigt werden. Als weiteres Beispiel für eine Weiterverarbitung der Polymerschmelze kann die Polymerschmelze auch direkt granuliert werden, zum Beispiel mittels eines Kühlbades und eines Zerhackers.

In einer bevorzugten Ausführungsform der Erfindung können die festen Polymere als Dispergiermittel für anorganische oder organische Dispersionen verwendet werden. Beispiele für solche Dispersionen sind Calcium-Carbonatdispersionen, Farbstoffdispersionen, Gipsaufschlämmungen, Dispersionen hydraulischer Bindemittel oder Kohleschlämme.

In einer weiter bevorzugten Ausführungsform können die festen Polymere als Dispergiermittel für Dispersionen, die hydraulisch abbindende Bindemittel oder Mischungen von hydraulisch abbindenen mit latent hydraulischen Bindemitteln enthalten, verwendet werden. Solche Dispergiermittel werden in der Betontechnologie als Verflüssiger bezeichnet. Hydraulisch abbindenden Bindemittel sind beispielsweise Zement, Schlacken, Gips oder Anhydrit. Unter latent hydraulisch abbindenen Massen versteht man beispielsweise Puzzolane oder Flugasche. Eine spezielle Verwendung stellt hierbei die Verwendung als Verflüssiger in Fertigmörteln dar.

Die erfindungsgemässen Polymeren in festem Aggregatzustand können direkt eingesetzt werden, indem man sie beispielsweise als Pulver oder Pellets den zu dispergierenden Stoffen beimischt oder falls die zu dispergierenden Stoffe gemahlen werden müssen, können diesen gegebenenfalls vor dem Mahlvorgang zugesetzt werden. Die festen Polymeren können aber auch in Wasser gelöst als wässrige Lösungen eingesetzt werden.

Dem festen Polymer, vorzugsweise vor dem Verarbeiten der Polymerschmelze, können noch andere Zusatzstoffe beigegeben werden. Solche Zusatzstoffe können beispielsweise Alkalien, wie beispielsweise Alkali- oder Erdalkalihydroxide, Ammoniak, C1-C2 Alkylamine sein, andere Dispergiermittel, wie beispielsweise sulfonierte Naphthalinkondensate, sulfonierte Melaminkondensate, Lignosulfonate, Polyacrylate, andere Polycarboxylate oder Abbinderverzögerer und/oder Abbindebeschleuniger für hydraulisch abbindende Bindemittel, Viskositätsmodifizierer, oberflächenaktive Substanzen wie Tenside oder Entschäumer, oder Schwindreduzierer sein.

### Beispiele

### Herstellvorschrift durch Umsetzung von Polymer A mit Polymer B (Beispiele PA-1 bis PA-5)

### Herstellvorschrift für erfindungsgemässes Polymer PA-1

In einen Rundkolben mit mechanischem Rührer, Thermometer, Gaseinleitrohr und Destillationsbrücke werden 160 g einer 50-prozentigen wässrigen Lösung von Polyacrylsäure (Molekulargewicht 4500) und 5,0 g einer 50-prozentigen Schwefelsäure vorgelegt. Die Mischung wird auf 50°C erwärmt und 400 g Polyethyleneglykol-Monomethylether (Molekulargewicht 2000) zugegeben. Die Reaktionsmischung wird unter N2-Strom auf 160°C erwärmt. Das in der Mischung enthaltene Wasser sowie das Reaktionswasser werden kontinuierlich unter N2-Strom abdestilliert. Nach vier Stunden ist eine Säurezahl von 1.5 mmol H+/g erreicht und die Polymerschmelze wird in Aluschalen von ca. 100 mm Durchmesser und ca. 7 mm Höhe, die auf nicht beheizten Keramikplatten eines Labortisches stehen, gegossen und erstarren gelassen.

Polymere PA-2 bis PA-5 wurden in gleicher Weise wie Polymer PA-1 hergestellt mit den in Tabelle a angegebenen Ausgangsstoffen und Reaktionszeiten.

### Herstellvorschrift für Vergleichspolymere VA-1 und VA-2

Die Vergleichspolymeren VA-1 und VA-2 wurden in gleicher Weise wie Polymer PA-1 hergestellt mit den in Tabelle b angegebenen Ausgangsstoffen und Reaktionszeiten

**Tabelle a: Herstellung der erfindungsgemässen Polymere PA-2 bis PA-5**

| Polymer | Polycarbonsäure-Lösung in H₂O (Polymer A) | Einsatzmenge (g) | Polyalkylenglykol (Polymer B) | Einsatzmenge (g) | Schwefelsäure 50%ig (g) | Reaktionszeit bei 160°C (Stunden) | Säurezahl (mmol H⁺/g) |
|---|---|---|---|---|---|---|---|
| PA-2 | Polyacrylsäure mit M_{w}= 4500 g/mol , 50% in H₂O | 160 | Methoxypolyethyleneglykol mit M_{w}=3000 g/mol | 600 | 6.0 | 5 | 1.00 |
| PA-3 | Copolymer von Methacrylsäure mit Acrylsäure im Molverhältnis 3:1 mit M_{w}= 4500 g/mol, 40%ig in H₂O | 230 | Methoxypolyethyleneglykol mit M_{w} =2000 g/mol | 440 | 3.0 | 3 | 1.05 |
| PA-4 | Polymethacrylsäure mit M_{w} = 4100 g/mol, 40% in Wasser | 245 | Methoxypolyethyleneglykol mit M_{w}=2000 g/mol | 400 | 2.0 | 3.5 | 0.80 |
| PA-5 | Copolymer von Methacrylsäure mit Acrylsäure im Molverhältnis 3:1 mit M_{w}=4500 g/mol 40% in H₂O | 230 | Methoxypolyethyleneglykol mit M_{w}=2000 g/mol und Methylpolyethylenglycolamin mit M_{w} = 520 g/mol | 300 und 60 | 2.0 | 2.5 | 1.10 |

**Tabelle b: Herstellung der Vergleichspolymere VA-1 und VA-2**

| Polymer | Polycarbonsäure-Lösung in H₂O (Polymer A) | Einsatz menge (g) | Poly-alkylenglykol (Polymer B) | Einsatz menge (g) | Schwefelsäure 50%ig (g) | Reaktionszeit bei 160°C (Stunden) | Säurezahl (mmol H⁺/g) |
|---|---|---|---|---|---|---|---|
| VA-1 | Copolymer von Methacrylsäure mit Acrylsäure im Molverhältnis 3:1 mit M_{w} =4500 g/mol, 40%ig in H₂O | 230 | Methoxypolyethyleneglykol mit M_{w} =350 g/mol | 175 | 1.5 | 1.5 | 1.50 |
| VA-2 | Polyacrylsäure mit M_{w} =7000 g/mol, 54%ig in H₂O | 155 | Methoxypolyethyleneoxidpolypropylenoxid-amin mit EO/PO Verhältnis von 70/30 mit M_{w}=2000 g/mol | 400 | 1.0 | 2.5 | 1.60 |

Die Polymeren PA1-PA5 konnten nach dem Auskühlen und Erstarren problemlos als Platten von den Schalen abgelöst und in kleine, nicht verklebende Stücke zerkleinert werden.

Die Vergleichspolymere VA-1 und VA-2 blieben auch nach 24 Stunden bei Raumtemperatur sowie auch nach 24 Stunden bei 6°C zähviskos und klebrig.

### Herstellvorschrift für die Umsetzung von Monomer a mit Monomer c und gegebenfalls Monomer b

### Herstellvorschrift für erfindungsgemässes Polymer (Beispiel PC-1)

In einen 500 ml Rundkolben mit mechanischem Rührer, Thermometer und Rückflusskühler werden 70 g deionisiertes Wasser vorgelegt und auf 75-80°C erwärmt. Sobald die Temperatur erreicht ist, werden gleichzeitig über unterschiedliche Dosierpumpen die Monomermischung (bestehend aus 121.2 g eines Esters von Methacrylsäure mit Polyethyleneglykol-5000 Monomethylether, 12.1 g Methacrylsäure und 140 g Wasser) und eine Lösung aus 3.1 g Natriumperoxodisulfat in 40 g Wasser innerhalb von 4 Stunden zudosiert. Dabei werden sofort und alle 15 Minuten in 8 Portionen insgesamt 1.4 g Thiomilchsäure zugegeben. Anschliessend werden 0.8 g Natriumperoxodisulfat in 5.0 g Wasser zugegeben und bei 75-80°C nachpolymerisiert bis der Peroxidtest negativ ist. Durch Zugabe von 6.4 g NaOH (50%ig) wird ein pH von 4.7 eingestellt. Der Rückflusskühler wird nun gegen eine Destillationsbrücke ausgetauscht und das Wasser abdestilliert. Die viskose Polymerschmelze wird in Aluschalen von ca. 100 mm Durchmesser und ca. 7 mm Höhe, die auf nicht beheizten Keramikplatten eines Labortisches stehen, gegossen und erstarren gelassen.

### Herstellvorschrift für Vergleichsbeispiel Polymer (Beispiel VC-1)

In einen 500 ml Rundkolben mit mechanischem Rührer, Thermometer und Rückflusskühler werden 92.0 g deionisiertes Wasser vorgelegt und auf 85-90°C erwärmt. Sobald die Temperatur erreicht ist, werden gleichzeitig über unterschiedliche Dosierpumpen die Monomermischung (bestehend aus 103.0 g eines Esters von Methacrylsäure mit Polyethyleneglykol-500 Monomethylether, 44.7 g Methacrylsäure und 110 g Wasser), eine Lösung aus 4.6 g Natriumpyrosulfit in 39.0 g Wasser und eine Lösung aus 5.7 g Natriumperoxodisulfat in 40.0 g Wasser innerhalb von 2 Stunden zudosiert. Anschliessend wird bei 85-90°C nachreagieren gelassen bis der Peroxidtest negativ ist. Der Rückflusskühler wird nun gegen eine Destillationsbrücke ausgetauscht und das Wasser abdestilliert. Die Polymerschmelze wird in Aluschalen von ca. 100 mm Durchmesser und ca. 7 mm Höhe, die auf nicht beheizten Keramikplatten eines Labortisches stehen, gegossen und erstarren gelassen.

Das Polymer PC-1 konnte nach dem Auskühlen und Erstarren problemlos als Platte von den Schalen abgelöst und in kleine, nicht verklebende Stücke zerkleinert werden. Das Vergleichspolymer VC-1 wurde auch nach 24 Stunden nicht fest, sondern blieb weich.

### Beispiel für den Einsatz von Calciumhydroxid als Beschleuniger für die Erstarrungsreaktion der Polymerschmelze

Die Herstellung von Polymer PA-1 wird in gleicher Ansatzgrösse wiederholt. Die Polymerschmelze wird auf 100°C gekühlt und es werden 2 Gewichtsprozent Calciumhydroxid-Pulver zugegeben und 5 Minuten gut eingemischt. Anschliessend wird die Polymerschmelze auf ein Blech ausgegossen und erstarren gelassen. Die Härte der festen Polymeren wurde mit Hilfe des Härteprüfgerätes nach Shore A, DIN 53505 geprüft. Das Erstarren mit Zusatz von Calciumhydroxid-Puver erfolgte deutlich schneller als ohne, wie in Tabelle c gezeigt.

**Tabelle c: Erstarrungsgeschwindigkeit der Polymerschmelzen PA-1 mit und ohne Calciumhydroxid-Zugabe (Labortemperatur = 23°C).**

| | Härte Shore A nach: | | | | | | |
|---|---|---|---|---|---|---|---|
| | 5 min. | 10 min. | 15 min. | 30 min. | 60 min. | 90 min. | 120 min. |
| **ohne** Ca(OH)2 | weich, n.m.^{‡} | weich, n.m.^{‡} | weich, n.m.^{‡} | weich, n.m.^{‡} | 55 | 59 | 60 |
| **mit** Ca(OH)2 | weich, n.m.^{‡} | Oberfläche hart aber noch n.m.^{‡} | 56 | 59 | 62 | 62 | 64 |

| | | | | | | | |
|---|---|---|---|---|---|---|---|
| ^{‡}n.m. = "nicht messbar" | | | | | | | |

Wie aus Tabelle c ersichtlich ist, wird durch Zugabe von Calciumhydroxid bereits nach 15 Minuten eine Festigkeit des Polymeren erreicht, die ohne Zugabe erst nach 60 Minuten erreicht ist.

### Beispiel für die Herstellung von wässrigen Polymerlösungen aus den festen Polymeren

30 g festes Polymer PA-1 werden in 70 g Wasser gelöst. Es wird eine klare, gelbliche Polymerlösung erhalten.

30 g festes Polymer PA-1, das unter Zusatz von 2 Gewichtsprozent Calciumhydroxid-Pulver erstarren gelassen wurde, werden in 70 g Wasser gelöst. Es wird eine trübe, gelbliche Polymerlösung erhalten.

## Patentansprüche

1. Polymer in festem Aggregatzustand erhältlich durch die Reaktion von mindestens einem Monomer **a** ausgewählt aus ungesättigten Mono- oder Dicarbonsäuren oder Analoga von ungesättigten Mono- oder Dicarbonsäuren,
in Gegenwart eines Radikalbildners
mit mindestens einem Monomer **c** ausgewählt aus der Gruppe der ungesättigten Ester und Amide eines Polymeren **B,** welches mit unter üblichen Reaktionsbedingungen nicht reaktiven Endgruppen einseitig abgeschlossen ist und am anderen Ende Hydroxy- oder Amin-funktionalisiert ist,
und gegebenenfalls mindestens einem ethylenisch ungesättigten Monomer **b;**
wobei das Polymer **B** die folgende Formel besitzt:
X-(EO)ₓ-(PO)_{y}-(BuO)_{z}-R
wobei x, y, z unabhängig voneinander je die Werte 0 - 250 aufweisen und x+y+z = 3 oder grösser ist;
X=OH oder NHR', mit R'=Alkyl mit 1-20 Kohlenstoffatomen, Alkylaryl mit 7-20 Kohlenstoffatomen oder H, vorzugsweise R'=H;
EO=Ethylenoxy, PO=Propylenoxy, BuO=Butylenoxy oder Isobutylenoxy;
und R= Alkyl mit 1-20 Kohlenstoffatomen oder Alkylaryl mit 7-20 Kohlenstoffatomen
bedeuten;
wobei der Gewichtsanteil der Summe von Propyleneoxid (PO)- und Butylenoxid(BuO)- Einheiten kleiner als 20 Gewichts-% des Polymeren **B** ist;
wobei das Molekulargewicht des Polymers **B** etwa 120-20'000 g/mol, insbesondere etwa 250-10'000 g/mol, ist;
und wobei der Anteil von allen Polymeren **B** mit Molekulargewichten unter 500g/mol kleiner als 50 Mol-% aller Polymere **B** beträgt, insbesondere kleiner als 30 Mol-% beträgt.

2. Polymer in festem Aggregatzustand gemäss Anspruch 1, **dadurch gekennzeichnet, dass** das Analogon der ungesättigten Mono- oder Dicarbonsäure ausgewählt ist aus der Gruppe Säuresalze, Säurehalogenide, Säureanhydride und Säureester.

3. Polymer in festem Aggregatzustand gemäss einem der vorhergehenden Ansprüche, **dadurch gekennzeichnet, dass** das Polymer **B** Verunreinigungen von difunktionellen Polymeren im Gewichtsanteil von weniger als 3 Gewichts-% enthält, vorzugsweise weniger als 2 Gewichts-%, insbesondere weniger als 1 Gewichts-%, bezogen auf das Gewicht des Polymeren **B.**

4. Polymer in festem Aggregatzustand gemäss einem der vorhergehenden Ansprüche, **dadurch gekennzeichnet, dass** Monomer **a** Maleinsäure, Itaconsäure, oder Crotonsäure ist, vorzugsweise Acrylsäure oder Methacrylsäure.

5. Polymer in festem Aggregatzustand gemäss einem der vorhergehenden Ansprüche, **dadurch gekennzeichnet, dass** das molare Verhältnis der Monomerbausteine (**a+c**):**b** im Bereich von 100:0 - 30:70 ist, vorzugsweise 100:0 - 50:50, insbesondere 98:2 - 70:30.

6. Polymer in festem Aggregatzustand gemäss einem der vorhergehenden Ansprüche, **dadurch gekennzeichnet, dass** das molare Verhältnis der Monomerbausteine **a** und **c** im Bereich von 200:1 - 0.1:1 ist, vorzugsweise 100:1 - 0.1:1, insbesondere 29:1 -0.1:1.

7. Polymer in festem Aggregatzustand gemäss einem der vorhergehenden Ansprüche, **dadurch gekennzeichnet, dass** das Polymer in festem Aggregatzustand als Pulver, Schuppen oder in Platten vorliegt.

8. Polymer in festem Aggregatzustand gemäss einem der vorhergehenden Ansprüche, **dadurch gekennzeichnet, dass** dem Polymer vor dem Erstarren mindestens ein Betonverflüssiger zugesetzt wird.

9. Polymer in festem Aggregatzustand gemäss einem der vorhergehenden Ansprüche, **dadurch gekennzeichnet, dass** dem Polymer vor dem Erstarren mindestens ein Zusatz für hydraulisch oder latent hydraulisch abbindende Bindemittel aus der Gruppe der Abbindeverzögerer, Abbindebeschleuniger, Viskositätsmodifizierer und Schwindreduzierer zugesetzt wird.

10. Verfahren zur Herstellung eines Polymers in festem Aggregatzustand gemäss einem der Ansprüche 1-9 durch Copolymerisation von mindestens einem ethylenisch ungesättigten, Carboxylgruppen- oder deren Analogon enthaltenden Monomer mit mindestens einem Ester oder Amid von ethylenisch ungesättigten mono- oder Dicarbonsäuren mit einem Polymer **B** und gegebenenfalls noch weiteren, copolymerisierbaren Monomeren und gegebenenfalls in einem Lösungsmittel, welches anschliessend entfernt wird.

11. Verfahren zur Herstellung eines Polymers in festem Aggregatzustand gemäss Anspruch 10, **dadurch gekennzeichnet, dass** der Polymerschmelze vor dem Erkalten wasserlösliche oder wasserdispergierbare Beschleuniger für die Erhärtungsreaktion der Polymerschmelze zugesetzt werden.

12. Verfahren zur Herstellung eines Polymers in festem Aggregatzustand gemäss Anspruch 11, **dadurch gekennzeichnet, dass** als wasserlösliche oder wasserdisperigierbare Beschleuniger für die Erhärtungsreaktion der Polymerschmelze Beschleuniger eingesetzt werden ausgewählt aus der Gruppe umfassend anorganische, organische Salze, Harnstoff und höhere Alkohole.

13. Verwendung des Polymers in festem Aggregatzustand gemäss einem der Ansprüche 1-9 als Dispergiermittel für wässrige Dispersionen.

14. Verwendung des Polymers in festem Aggregatzustand gemäss einem der Ansprüche 1-9 als Verflüssiger für hydraulisch abbindende Systeme.

15. Verwendung des Polymers in festem Aggregatzustand gemäss einem der Ansprüche 1-9 als Verflüssiger in Fertigmörtel Systeme.

16. Verwendung des Polymers in festem Aggregatzustand gemäss einem der Ansprüche 1-9 in Wasser gelöst als Verflüssiger für zementhaltige Systeme.

17. Wässrige Lösung, erhalten durch Auflösen des Polymers in festem Aggregatzustand gemäss einem der Ansprüche 1-9 in Wasser.

## Claims

1. Polymer in the solid state, obtainable by the reaction
of at least one monomer **a** selected from unsaturated monocarboxylic or dicarboxylic acids or analogues of unsaturated monocarboxylic or dicarboxylic acids,
in the presence of a free-radical initiator
with at least one monomer **c** selected from the group of unsaturated esters and amides of a polymer **B** which is terminated at one end by end groups which are not reactive under customary reaction conditions and is hydroxy- or amine-functionalized at the other end,
and optionally at least one ethylenically unsaturated monomer **b;**
wherein the polymer **B** has the following formula:
X-(EO)ₓ-(PO)_{y}-(BuO)_{z}-R
wherein x, y and z each independently have a value 0-250 and x+y+z = 3 or more;
X=OH or NHR', with R'=alkyl having 1-20 carbon atoms, alkylaryl having 7-20 carbon atoms or H, preferably R'=H;
EO=ethylenoxy, PO=propylenoxy, BuO=butylenoxy or isobutylenoxy;
and R=alkyl having 1-20 carbon atoms or alkylaryl having 7-20 carbon atoms;
wherein the proportion by weight of the sum of propylene oxide (PO) and butylene oxide (BuO) units is less than 20 wt% of the polymer **B;**
wherein the molecular weight of the polymer **B** is approximately 120-20 000 g/mol, especially approximately 250-10 000 g/mol;
and wherein the proportion of all polymers **B** with molecular weights lower than 500 g/mol is less than 50 mol% of all polymers **B,** especially less than 30 mol%.

2. Polymer in the solid state according to Claim 1, **characterized in that** the analogue of the unsaturated monocarboxylic or dicarboxylic acid is selected from the group of acid salts, acid halides, acid anhydrides and acid esters.

3. Polymer in the solid state according to either of the preceding claims, **characterized in that** the polymer B comprises difunctional polymer impurities in a proportion by weight of less than 3 wt%, preferably less than 2 wt%, especially less than 1 wt% based on the weight of the polymer B.

4. Polymer in the solid state according to one of the preceding claims, **characterized in that** monomer a is maleic acid, itaconic acid or crotonic acid, preferably acrylic acid or methacrylic acid.

5. Polymer in the solid state according to one of the preceding claims, **characterized in that** the molar ratio of the monomer units (a+c):b is in the range from 100:0-30:70, preferably 100:0-50:50, especially 98:2-70:30.

6. Polymer in the solid state according to one of the preceding claims, **characterized in that** the molar ratio of the monomer units a and c is in the range from 200:1-0.1:1, preferably 100:1-0.1:1, especially 29:1-0.1:1.

7. Polymer in the solid state according to one of the preceding claims, **characterized in that** the polymer is present in the solid state as powder, flakes or in sheets.

8. Polymer in the solid state according to one of the preceding claims, **characterized in that** at least one concrete fluidizer is added to the polymer prior to solidification.

9. Polymer in the solid state according to one of the preceding claims, **characterized in that** at least one additive for hydraulically or latently hydraulically setting binders from the group of setting retarders, setting accelerators, viscosity modifiers and shrinkage reducers is added to the polymer prior to solidification.

10. Process for preparing a polymer in the solid state according to one of Claims 1 to 9 by copolymerization of at least one ethylenically unsaturated monomer comprising carboxyl groups or analogues thereof with at least one ester or amide of ethylenically unsaturated monocarboxylic or dicarboxylic acids with a polymer B and optionally further copolymerizable monomers and optionally in a solvent which is subsequently removed.

11. Process for preparing a polymer in the solid state according to Claim 10, **characterized in that** water-soluble or water-dispersible accelerators for the setting reaction of the polymer melt are added to the polymer melt prior to cooling.

12. Process for producing a polymer in the solid state according to Claim 11, **characterized in that** accelerators selected from the group consisting of inorganic or organic salts, urea and higher alcohols are used as water-soluble or water-dispersible accelerators for the setting reaction of the polymer melt.

13. Use of the polymer in the solid state according to one of Claims 1-9 as dispersant for aqueous dispersions.

14. Use of the polymer in the solid state according to one of Claims 1-9 as fluidizer for hydraulically setting systems.

15. Use of the polymer in the solid state according to one of Claims 1-9 as fluidizer in ready-to-use mortar systems.

16. Use of the polymer in the solid state according to one of Claims 1-9 dissolved in water as fluidizer for systems containing cement.

17. Aqueous solution obtained by dissolving the polymer in the solid state according to one of Claims 1-9 in water.

## Revendications

1. Polymère à l'état d'agrégation solide pouvant être obtenu par la réaction d'au moins un monomère **a** choisi parmi les acides mono- ou dicarboxyliques insaturés ou les analogues d'acides mono- ou dicarboxyliques insaturés,
en présence d'un agent de formation de radicaux,
avec au moins un monomère **c** choisi dans le groupe des esters et amides insaturés d'un polymère **B,** qui est terminé d'un côté avec des groupes terminaux non réactifs dans des conditions de réaction usuelles et qui est fonctionnalisé à l'autre extrémité avec des groupes hydroxy ou amino,
et éventuellement au moins un monomère éthyléniquement insaturé **b** ;
le polymère **B** présentant la formule suivante :
X-(EO)ₓ-(PO)_{y}-(BuO)_{z}-R
dans laquelle x, y, z ont chacun indépendamment les uns des autres des valeurs de 0 à 250, et x+y+z = 3 ou plus ;
X = OH ou NHR', avec R' = alkyle de 1 à 20 atomes de carbone, alkylaryle de 7 à 20 atomes de carbone ou H, de préférence R' = H ;
EO = éthylène-oxy, PO = propylène-oxy, BuO = butylène-oxy ou isobutylène-oxy ;
et R = alkyle de 1 à 20 atomes de carbone ou alkylaryle de 7 à 20 atomes de carbone,
la proportion en poids de la somme des unités oxyde de propylène (PO) et oxyde de butylène (BuO) étant inférieure à 20 % en poids du polymère **B ;**
le poids moléculaire du polymère **B** étant d'environ 120 à 20 000 g/mol, notamment d'environ 250 à 10 000 g/mol ;
et la proportion de tous les polymères **B** ayant des poids moléculaires inférieurs à 500 g/mol étant inférieure à 50 % en moles de tous les polymères **B,** notamment inférieure à 30 % en moles.

2. Polymère à l'état d'agrégation solide selon la revendication 1, **caractérisé en ce que** l'analogue de l'acide mono- ou dicarboxylique insaturé est choisi dans le groupe constitué par les sels d'acides, les halogénures d'acides, les anhydrides d'acides et les esters d'acides.

3. Polymère à l'état d'agrégation solide selon l'une quelconque des revendications précédentes, **caractérisé en ce que** le polymère **B** contient des impuretés de polymères bifonctionnels en une proportion en poids de moins de 3 % en poids, de préférence de moins de 2 % en poids, notamment de moins de 1 % en poids, par rapport au poids du polymère **B.**

4. Polymère à l'état d'agrégation solide selon l'une quelconque des revendications précédentes, **caractérisé en ce que** le monomère **a** est l'acide maléique, l'acide itaconique ou l'acide crotonique, de préférence l'acide acrylique ou l'acide méthacrylique.

5. Polymère à l'état d'agrégation solide selon l'une quelconque des revendications précédentes, **caractérisé en ce que** le rapport molaire entre les constituants monomères (**a+c**):**b** est dans la plage allant de 100:0 à 30:70, de préférence de 100:0 à 50:50, notamment de 98:2 à 70:30.

6. Polymère à l'état d'agrégation solide selon l'une quelconque des revendications précédentes, **caractérisé en ce que** le rapport molaire entre les constituants monomères **a** et **c** est dans la plage allant de 200:1 à 0,1:1, de préférence de 100:1 à 0,1:1, notamment de 29:1 à 0,1:1.

7. Polymère à l'état d'agrégation solide selon l'une quelconque des revendications précédentes, **caractérisé en ce que** le polymère à l'état d'agrégation solide se présente sous la forme d'une poudre, de flocons ou en plaques.

8. Polymère à l'état d'agrégation solide selon l'une quelconque des revendications précédentes, **caractérisé en ce qu'**au moins un liquéfiant de béton est ajouté au polymère avant la solidification.

9. Polymère à l'état d'agrégation solide selon l'une quelconque des revendications précédentes, **caractérisé en ce qu'**au moins un additif pour liant hydraulique ou hydraulique latent du groupe constitué par les retardateurs de prise, les accélérateurs de prise, les modificateurs de viscosité et les réducteurs de retrait est ajouté au polymère avant la solidification.

10. Procédé de fabrication d'un polymère à l'état d'agrégation solide selon l'une quelconque des revendications 1 à 9 par copolymérisation d'au moins un monomère éthyléniquement insaturé contenant des groupes carboxyle ou leur analogue avec au moins un ester ou amide d'acides mono- ou dicarboxyliques éthyléniquement insaturés avec un polymère **B** et éventuellement d'autres monomères copolymérisables et éventuellement dans un solvant, qui est éliminé ultérieurement.

11. Procédé de fabrication d'un polymère à l'état d'agrégation solide selon la revendication 10, **caractérisé en ce que** des accélérateurs solubles dans l'eau ou dispersibles dans l'eau pour la réaction de solidification de la masse fondue de polymère sont ajoutés à la masse fondue de polymère avant le refroidissement.

12. Procédé de fabrication d'un polymère à l'état d'agrégation solide selon la revendication 11, **caractérisé en ce que** des accélérateurs choisis dans le groupe comprenant les sels inorganiques, organiques, l'urée et les alcools supérieurs sont utilisés en tant qu'accélérateurs solubles dans l'eau ou dispersibles dans l'eau pour la réaction de solidification de la masse fondue de polymère.

13. Utilisation du polymère à l'état d'agrégation solide selon l'une quelconque des revendications 1 à 9 en tant que dispersant pour dispersions aqueuses.

14. Utilisation du polymère à l'état d'agrégation solide selon l'une quelconque des revendications 1 à 9 en tant que liquéfiant pour systèmes à prise hydraulique.

15. Utilisation du polymère à l'état d'agrégation solide selon l'une quelconque des revendications 1 à 9 en tant que liquéfiant dans des systèmes de mortier préfabriqué.

16. Utilisation du polymère à l'état d'agrégation solide selon l'une quelconque des revendications 1 à 9 dissous dans de l'eau en tant que liquéfiant pour systèmes contenant du ciment.

17. Solution aqueuse, obtenue par dissolution du polymère à l'état d'agrégation solide selon l'une quelconque des revendications 1 à 9 dans de l'eau.
